# EUROPEAN PATENT SPECIFICATION

(11) **EP 1 589 213 B1**
(45) Date of publication and mention of the grant of the patent: **19.07.2006**
(21) Application number: 04425279.9
(22) Date of filing: 21.04.2004
(51) Int. Cl.: F02M 25/07

(54) **Turbo-charged diesel engine with a "Long Route" exhaust gas recirculation system**
Turboaufgeladener Dieselmotor mit langwegigem Abgasrückführsystem
Moteur diesel turbo-suralimenté avec système de recyclage des gaz d'échappement de grande longueur

(43) Date of publication of application: 26.10.2005
(73) Proprietor: C.R.F. Società Consortile per Azioni, 10043 Orbassano (Torino) (IT)
(72) Inventor: Tonetti, Marco c/o C.R.F. Soc. Cons. per Azioni, I-10043 Orbassano (Torino) (IT); Ivaldi, Dario c/o C.R.F. Soc. Cons. per Azioni, I-10043 Orbassano (Torino) (IT)
(74) Representative: Notaro, Giancarlo

(56) References cited:
- EP-A- 1 193 388
- EP-A- 1 340 904
- WO-A-03/102391
- US-A- 5 333 456
- US-A1- 2003 164 163
- US-B1- 6 338 245
- PATENT ABSTRACTS OF JAPAN vol. 2003, no. 01, 14 January 2003 (2003-01-14) -& JP 2002 276405 A (ISUZU MOTORS LTD), 25 September 2002 (2002-09-25)

## Description

The present invention relates to turbo-charged diesel engines, of the type indicated in the preamble of claim 1. The catalytic-converter means and particulate-filtering means may be integrated in a single component that carries out both of the functions, or else may be constituted by two different components, without excluding the possibility of there being also present other components such as, for example, NOx traps.

An engine of this type is disclosed in WO 03/102391 or in US 6,338,245.

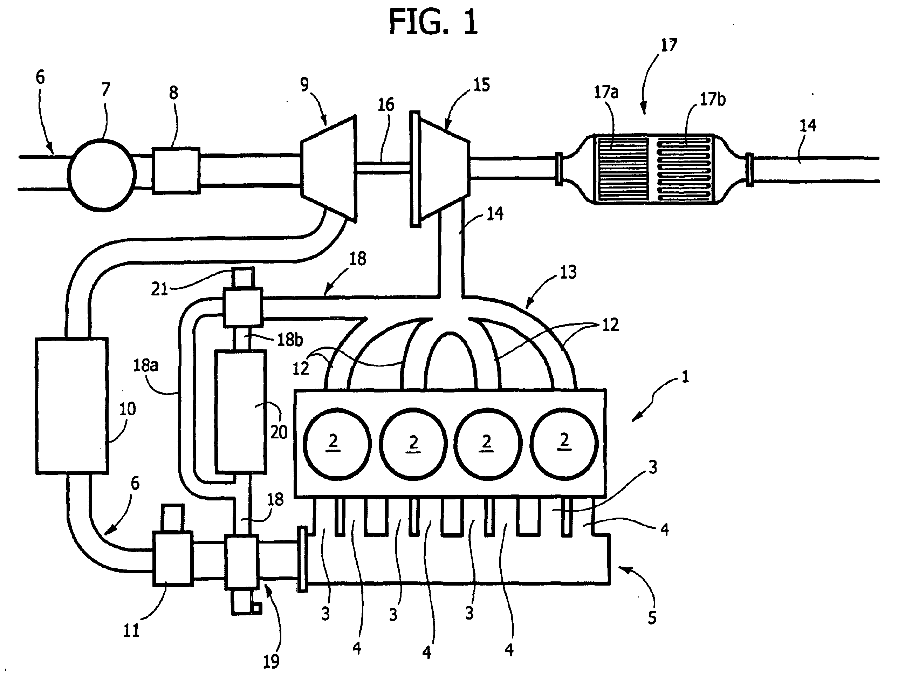

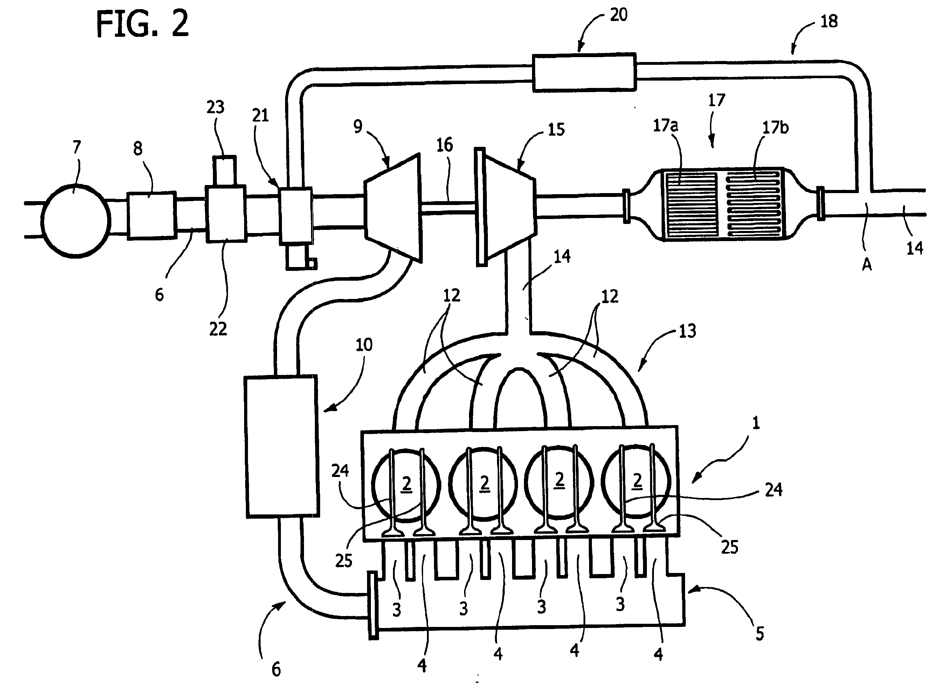

Conventional engines of the type indicated above typically comprise a number of cylinders and one or more turbosuperchargers, possibly integrated with an electric compressor. In said engines, typically used in motor vehicles, the exhaust-gas recirculation (EGR) pipe branches off from the main exhaust pipe, upstream of the turbine, and converges in the main intake pipe downstream of the compressor. Said known system is schematically illustrated in Figure 1 of the annexed plate of drawings. In said figure, the reference number 1 designates as a whole a diesel-engine block with four cylinders 2, each provided with two intake pipes 3, 4 controlled by respective intake valves (not illustrated), and forming part of an intake manifold 5, which receives air through a main intake pipe 6. Arranged in series in the main intake pipe 6 are: an air filter 7; a flowmeter 8; a compressor 9; a cooling device or intercooler 10; and a throttle valve 11. Associated to each cylinder 2 of the engine 1 is moreover an exhaust pipe 12, controlled by a respective exhaust valve (not illustrated), forming part of an exhaust manifold 13 connected to a main exhaust pipe 14. Arranged in series in the main exhaust pipe 14 are a turbine 15, which drives the compressor 9 via a transmission shaft 16, and a device 17 for treatment of the exhaust gases, which comprises, set close to one another, a catalytic converter 17a and a filter for particulate 17b. Once again in the case of the known arrangement illustrated in Figure 2, there is further provided an exhaust-gas recirculation pipe 18, which branches off from the exhaust pipe 14, upstream of the turbine 15, and converges into the main intake pipe 6, downstream of the compressor 9 and the intercooler 10. In a position corresponding to said confluence, there is provided a valve 19 for regulation of the gas flow through the recirculation pipe 18. Furthermore, in the example illustrated, the EGR pipe has an intermediate part, which branches into two pipes 18a and 18b parallel to one another, the pipe 18b traversing an intercooler 20. At the point in which the EGR pipe branches into the two parallel pipes 18a, 18b, there is provided a valve 21, which regulates the gas flow through each of the two parallel pipes 18a, 18b to enable variation of the degree of cooling of the exhaust gases.

The exhaust-gas recirculation system made in the known way described above presents some drawbacks. In the first place, the exhaust gases that are made to recirculate give rise to phenomena of dirtying of the valves, of the engine pipes and of the intercooler of the EGR system. In the second place, the mixing between the recirculated gas and the air taken in is not always optimal, so that there occurs a lack of uniformity of combustion in the various cylinders of the engine. Another drawback lies in the fact that the exhaust gases that are recirculated have a temperature that is still high, which gives rise to a high temperature of the gas/air mixture at input to the engine, with consequent production of noxious emissions and particulate. Finally, the turbine is not exploited in the most efficient way, given that not all the exhaust-gas flow passes through it.

With a view to overcoming the aforesaid drawbacks, the subject of the present invention is a turbo-charged diesel engine presenting all the characteristics of claim 1.

Thanks to the aforesaid characteristics, the engine according to the invention presents a series of advantages. In the first place, the recirculated gases are "clean", in so far as they have already traversed the treatment device comprising the catalytic converter and the particulate filter. There are thus eliminated or in any case greatly reduced the phenomena of dirtying of the valves and of the engine pipes. A further advantage deriving from the invention is that of guaranteeing an excellent mixing between the recirculated gases and the fresh air, with consequent uniformity of combustion between the various cylinders. Furthermore, since the recirculated gases are taken in downstream of the turbine and downstream of the exhaust-gas treatment device, their temperature is relatively low, with the consequence that also the mixture of the recirculated gases with the air at input to the engine is at a relatively low temperature, which enables reduction of emissions (particulate and NOx). Finally, thanks to the characteristics of the invention, the turbine is traversed by the entire flow of exhaust gases, which enables control of the compressor with maximum efficiency.

In the system according to the invention, the mixture of recirculated exhaust gases and air drawn in is then compressed by the compressor and cooled by the intercooler (air-air or air-water exchanger), which is provided in the intake pipe downstream of the compressor.

The valve for regulation of the flow of the recirculation gases may be of any known type and is provided at the confluence of the recirculation pipe into the intake pipe.

As has already been said, the main advantage of the system according to the invention lies in the fact that the recirculated gases are "clean", i.e., substantially without unburnt hydrocarbons and particulate matter.

A possible disadvantage of the system according to the invention, as defined above, could lie in a relatively slow response of the system, with possible problems of control in the transient regimes of the engine. A further possible drawback could lie in the fact that the mixture of the recirculated gases with the air at input to the engine is always at a relatively low temperature, with a consequent increase in the CO and HC emissions during cold starting of the engine. In order to eliminate also these possible disadvantages, in a preferred embodiment of the invention, in addition to the recirculation system described above, there is also envisaged an exhaust-gas recirculation system of a traditional "short route" type with a recirculation pipe of the type illustrated in Figure 1, which branches off from the exhaust pipe upstream of the turbine and converges in the intake pipe downstream of the compressor. In this way, the engine exploits simultaneously both a recirculation system according to the invention, i.e., of the long-route type, and a recirculation system of the conventional short-route or "hot-gas" type.

In combination with the long-route recirculation system according to the invention, the engine is provided with an "internal" EGR system, according to the teachings of the preceding European patent application EP 1 273 770 A2, in the name of the present applicant. In this document, there is illustrated an engine provided with a system for variable actuation of the engine valves (which, in the framework of the present invention can be applied only to the intake valves or else both to the intake valves and to the exhaust valves). In said known system, which is applicable also to the engine according to the invention, the engine valves are controlled by the respective cams of the engine camshaft via the interposition of a chamber of fluid under pressure, which can be discharged by means of a solenoid valve controlled by an electronic control unit. When the pressurized chamber is discharged, the respective valve returns rapidly into its closing condition, even in the case where the control cam would tend to maintain it open. By exploiting said arrangement, it is thus possible to vary as required the times of opening and closing of the engine valves, according to any desired law. In particular, the European patent application mentioned above envisages the possibility of programming the electronic control means of the system so as to maintain the intake valves and the exhaust valves simultaneously open in some phases of the operating cycle of the engine to obtain an internal recirculation of the exhaust gases. According to said proposal, during the normal exhaust stroke of a cylinder of the engine, part of the exhaust gases returns into the intake pipe, instead of flowing into the exhaust pipe and is then re-introduced into the combustion chamber in the subsequent induction stroke. Furthermore, part of the exhaust gases that in the exhaust stroke normally enters the exhaust pipe of the cylinder, also returns into the combustion chamber during the induction stroke, again on account of the simultaneous opening of the intake and exhaust valves. Consequently, the two amounts of gas mentioned above return into the combustion chamber, to undergo a further combustion in the subsequent cycle.

As already indicated, falling within the framework of the present invention is an engine which, in combination with a long-route EGR system of the type described above, will envisage also an "internal" EGR system of the type forming the subject of the document EP 1 273 770 A2. In this way, all the advantages of the long-route system are achieved, eliminating the drawbacks thereof.

The invention will now be described with reference to the annexed drawings, which are provided purely by way of non-limiting example, and in which:
- Figure 1, which has already been described, relates to a conventional engine according to the known art; whilst
- Figure 2 illustrates a preferred embodiment of the engine according to the invention.

In Figure 2, the parts that are in common with the ones of Figure 1, already described above, are designated by the same reference numbers.

The main difference with respect to the conventional system illustrated in Figure 1 lies in the fact that, in the case of the invention, the exhaust-gas recirculation pipe, designated by the reference number 18, branches off from the main exhaust pipe 14 starting from a point A located downstream of the gas-treatment device 17 and converges in the intake pipe 6 at a point located upstream of the compressor 9, where a valve 21 of any known type for control of the flow of the exhaust gases recirculated through the pipe 18 is located.

Of course, in conformance with the prior art, the actuator of the valve 21 is preferably controlled by electronic control means, according to a pre-set programmed logic. Also in the case of the invention, there is preferably provided an intercooler 20 set inside the exhaust-gas recirculation pipe 18. Furthermore, for the purpose of forcing passage of large amounts of exhaust gases, there is preferably provided a throttle valve 22, with a corresponding actuator device 23, which is capable of increasing the pressure jump through the recirculation pipe 18. Said device can be indifferently mounted on the intake pipe, as illustrated in Figure 2, upstream of the point 21 of intake of recirculated gases, or else on the exhaust pipe 14, in a point downstream of the area A where the gas to be recirculated is drawn in.

Thanks to the arrangement described above, the advantages that have been extensively illustrated in the preceding description are achieved.

In a further preferred embodiment, the device according to the invention, in addition to the recirculation pipe 18 illustrated in Figure 2, which provides a long-route EGR, may also be provided with a recirculation pipe 18 of the type illustrated in Figure 1, according to a short-route arrangement. In this way, the advantages of the two systems are combined, thus obviating the partial drawbacks of the long-route system.

In combination with the long-route EGR system illustrated in Figure 2, the engine is also provided with an internal EGR system according to the teachings of the European patent publication EP 1 273 770 A2 in the name of the present applicant. In this case, the engine is provided with means of the type illustrated in said known document. In particular, at least the intake valves 24, or else both the intake valves 24 and the exhaust valves 25 of the engine (Figure 2), are controlled by the respective cams of the engine camshaft via a hydraulic electronic-control system of the type illustrated in the prior document in the name of the present applicant. Programming is such that, in given phases of the operating cycle of the engine, the intake and exhaust valves are maintained simultaneously open, in order that, during the exhaust stroke in a cylinder of the engine, part of the exhaust gases will return into the intake pipe and, in the subsequent induction stroke, the amount of exhaust gases previously fed into the intake pipe will return into the combustion chamber, together with a further part of the exhaust gases, which returns into the combustion chamber coming from the exhaust pipe, which is also left temporarily open during the induction stroke. Consequently, the total sum of the aforesaid two amounts of exhaust gases that will return into the combustion chamber is again subjected to a combustion stroke, so providing an EGR internal to the engine. Also the arrangement of said internal EGR in combination with the long-route recirculation system according to the invention enables maximization of the advantages of said solution, without presenting the drawbacks thereof.

## Claims

1. A turbo-charged diesel engine, comprising:
- at least one cylinder (2) with at least one intake valve (24) and at least one exhaust valve (25), which control, respectively, an intake pipe (3, 4) and an exhaust pipe (12);
- a compressor (9) set inside a main air-intake pipe (6) connected to the aforesaid intake pipe (3, 4) of the cylinder (2);
- a control turbine (15) for driving the compressor (9), set inside a main exhaust pipe (14) connected to said exhaust pipe (12) of the cylinder (2);
- an exhaust-gas treatment device (17), which is set inside the main exhaust pipe (14) downstream of the turbine (15) and comprises catalytic-converter means (17a) and particulate-filtering means (17b); and
- an exhaust-gas recirculation pipe (18), controlled by a respective exhaust-gas recirculation valve (19), for feeding at least part of the exhaust gases that flow in the main exhaust pipe (14) back into the main pipe (6);
- wherein said exhaust-gas recirculation pipe (18) branches off from the main exhaust pipe (14) at a point (A) downstream of the turbine (15) and of the exhaust-gas treatment device (17), and converges in the main intake pipe (6) at a point (21) upstream of the compressor (9),
- wherein set in the exhaust-gas recirculation pipe (18) is an intercooler (20)
- wherein the exhaust-gas recirculation valve (21) is set at the confluence of the exhaust-gas recirculation pipe (18) in the main intake pipe (6)
- wherein set inside the main intake pipe (6) is a throttle valve (22), upstream of the confluence (21) of the exhaust-gas recirculation pipe (18),
**characterized in that** at least the intake valve (24) of the cylinder (2) is controlled by an electronic-controlled variable-actuation system, provided for enabling phases of simultaneous opening of the intake valve (24) and of the exhaust valve (25) in order to provide an exhaust-gas recirculation inside the engine, and
- wherein the engine valve (24,25) are controlled by the respective cams of the engine camshaft via the interposition of a chamber of fluid under pressure, which can be discharged by means of a solenoid valve controlled by an electronic control unit.

## Patentansprüche

1. Turboaufgeladener Dieselmotor, umfassend:
- mindestens einen Zylinder (2) mit mindestens einem Einlassventil (24) und mindestens einem Auslassventil (25), die jeweils ein Ansaugrohr (3, 4) und ein Auslassrohr (12) steuern;
- einen Kompressor (9), der in einem Hauptluftansaugrohr (6) eingesetzt ist, das mit dem oben genannten Ansaugrohr (3, 4) des Zylinders (2) verbunden ist;
- eine Steuerungsturbine (15) zum Antrieb des Kompressors (9), die in einem Hauptauslassrohr (14) eingesetzt ist, das mit besagtem Auslassrohr (12) des Zylinders (2) verbunden ist;
- eine Abgasaufbereitungsvorrichtung (17), die im Hauptauslassrohr (14) stromabwärts der Turbine (15) eingesetzt ist und einen Katalysator (17a) und einen Partikelfilter (17b) umfasst, und
- ein Abgasrückführungsrohr (18), das durch ein zugehöriges Abgasrückführungsventil (19) gesteuert wird, um wenigstens einen Teil der Abgase, die in dem Hauptauslassrohr (14) strömen, zurück in das Hauptrohr (6) zu leiten;
- wobei besagtes Abgasrückführungsrohr (18) eine Nebenleitung des Hauptauslassrohrs (14) ist, die an einem Punkt (A) stromabwärts der Turbine (15) und der Abgasaufbereitungsvorrichtung (17) abzweigt und an einem Punkt (21) stromaufwärts des Kompressors (9) wieder mit dem Hauptansaugrohr (6) zusammenläuft,
- wobei in das Abgasrückführungsrohr (18) ein Zwischenkühler (20) eingesetzt ist,
- wobei das Abgasrückführungsventil (21) am Zulauf des Abgasrückführungsrohrs (18) in dem Hauptansaugrohr (6) eingesetzt ist,
- wobei in dem Hauptansaugrohr (6) ein Reglerventil (22) eingesetzt ist, und zwar stromaufwärts des Zulaufs (21) des Abgasrückführungsrohrs (18),
**dadurch gekennzeichnet dass**
zumindest das Einlassventil (24) des Zylinders (2) durch ein elektrisch gesteuertes, variables Betätigungssystem gesteuert wird, das bereitgestellt wird, damit sich das Einlassventil (24) und das Auslassventil (25) phasenweise simultan öffnen können, um eine Abgasrückführung innerhalb des Motors bereitzustellen, und
wobei die Motorventile (24, 25) durch die jeweiligen Nocken der Motornockenwelle unter Zwischenschaltung einer Flüssigkeitsdruckkammer gesteuert werden, die mit Hilfe eines durch eine elektronische Steuereinheit gesteuerten Magnetventils entladen werden kann.

## Revendications

1. Moteur diesel à turbocompresseur, comprenant :
- au moins un cylindre (2) avec au moins une soupape d'admission (24) et au moins une soupape d'échappement (25), qui commandent, respectivement, un tuyau d'admission (3, 4) et un tuyau d'échappement (12) ;
- un compresseur (9) fixé à l'intérieur d'un tuyau d'entrée d'air principal (6) connecté au tuyau d'admission susmentionné (3, 4) du cylindre (2) ;
- une turbine de commande (15) destinée à entraîner le compresseur (9), fixée dans un tuyau d'échappement principal (14) connecté audit tuyau d'échappement (12) du cylindre (2) ;
- un dispositif de traitement de gaz d'échappement (17), qui est fixé à l'intérieur du tuyau d'échappement principal (14) en aval de la turbine (15) et comprend un moyen de pot catalytique (17a) et un moyen de filtre à particules (17b) ; et
- un tuyau de recirculation des gaz d'échappement (18), commandé par une soupape respective de recirculation des gaz d'échappement (19), destiné à renvoyer au moins une partie du gaz d'échappement qui circule dans le tuyau d'échappement principal (14) dans le tuyau principal (6) ;
- dans lequel ledit tuyau de recirculation des gaz d'échappement (18) bifurque du tuyau d'échappement principal (14) à un point (A) en aval de la turbine (15) et du dispositif de traitement des gaz d'échappement (17), et converge dans le tuyau d'admission principal (6) à un point (21) en amont du compresseur (9),
- dans lequel un refroidisseur d'air de suralimentation (20) est fixé dans le tuyau de recirculation des gaz d'échappement (18),
- dans lequel la soupape de recirculation des gaz d'échappement (21) est fixée à la confluence du tuyau de recirculation des gaz d'échappement (18) et du tuyau d'admission principal (6),
- dans lequel est fixé à l'intérieur du tuyau d'admission principal (6) un papillon des gaz (22), en amont de la confluence (21) du tuyau de recirculation des gaz d'échappement (18),
- **caractérisé en ce qu'**au moins la soupape d'admission (24) du cylindre (2) est commandée par un système à actionnement variable à commande électronique, fourni pour permettre des phases d'ouverture simultanée de la soupape d'admission (24) et de la soupape d'échappement (25) afin de fournir une recirculation des gaz d'échappement à l'intérieur du moteur, et
- dans lequel les soupapes du moteur (24, 25) sont commandées par les cames respectives de l'arbre de cames du moteur par l'interposition d'une chambre de fluide sous pression, qui peut-être déchargée au moyen d'une électrovalve commandée par une unité de commande électronique.
